# EUROPEAN PATENT SPECIFICATION

(11) **EP 3 866 233 B1**
(45) Date of publication and mention of the grant of the patent: **23.11.2022**
(21) Application number: 19906563.2
(22) Date of filing: 22.03.2019
(51) Int. Cl.: H01M 6/50, H01M 10/42, A62C 3/16, H01M 50/143, H01M 50/204, H01M 50/271, H01M 50/342, H01M 50/358, H01M 50/383

(54) **BATTERY MODULE**
BATTERIEMODUL
MODULE DE BATTERIE

(30) Priority: 28.12.2018 CN 201822239520 U
(43) Date of publication of application: 18.08.2021
(73) Proprietor: Contemporary Amperex Technology Co., Limited, Ningde, Fujian 352100 (CN)
(72) Inventor: CHEN, Xingdi, Ningde, Fujian 352100 (CN); YOU, Kaijie, Ningde, Fujian 352100 (CN); LI, Ziyuan, Ningde, Fujian 352100 (CN); XIANG, Yanhuo, Ningde, Fujian 352100 (CN); SHI, Dongyang, Ningde, Fujian 352100 (CN); HU, Fei, Ningde, Fujian 352100 (CN)
(74) Representative: Herrero & Asociados, S.L.
(86) International application number: PCT/CN2019/079233
(87) International publication number: WO 2020/133745

(56) References cited:
- EP-A1- 3 352 243
- WO-A1-2020/133750
- CN-U- 207 886 552

## Description

### TECHNICAL FIELD

The invention relates to the technical field of batteries, in particular, to a battery module.

### BACKGROUND

During the using process of a battery module, there is usually a risk of a thermal runaway. Currently, in order to reduce the risk of the thermal runaway and reduce an impact brought by the thermal runaway, methods commonly used at present are as follows: (1) a complicated fire extinguishing liquid pipeline is arranged in a box body of the battery module, which is difficult to design and assemble and costly, and it takes up a lot of space in the box, thus resulting in a low energy density of the battery module; (2) fire extinguishing fluid is directly disposed in the box body, during the using process of the battery module, the fire extinguishing fluid can easily flow in all directions and adhere to other positions, so that the effective extinguishing fluid in the box body become less and less, and at the moment of the thermal runaway, the fire extinguishing fluid may be just outside a flame position of the battery, thus resulting in an inability to extinguish the fire timely; (3) fire resistant materials are arranged at the flame position of the battery to withstand the fire, but it can easily make the thermal runaway diffuse in the battery module, resulting in more and more battery thermal runaways, thereby increasing the degree of the thermal runaway.

CN207886552U discloses a fire extinguishing strip for the battery module which has a fire extinguishing agent containing cavity. The fire extinguishing strip for the battery module is provided with at least two battery docking ports for docking with the explosion-proof structure of the battery unit to release the pressure of the battery unit when the explosion-proof structure of the battery unit is opened. The cavity wall of the fire extinguishing agent containing cavity is provided with an explosion-proof structure of the containing cavity for opening and releasing the pressure when the pressure in the extinguishing agent containing cavity reaches a set value. The fluid flushed out of the battery unit enters the fire extinguishing agent containing cavity through the battery pair interface, and the fire extinguishing agent extinguishes the battery unit.

### SUMMARY

The invention is set out in the appended set of claims.

### BRIEF DESCRIPTION OF DRAWINGS

FIG. 1 is an exploded view of a battery module of the invention.
FIG. 2 is a cross-sectional schematic view of assembled parts in FIG. 1, in which an upper cover is omitted.
FIG. 3 is an enlarged view of a circle portion in FIG. 2.
FIG. 4 is a perspective view of a pressing strip in FIG. 1 as seen from the back. FIG. 5 is a modified example of FIG. 4.
FIG. 6 is the other modified example of FIG. 4 and shows a sealing cover corresponding to each opening.
FIG. 7 is a cross-sectional schematic view of the interior of the pressing strip in FIG. 6.

**Reference signs are explained as follows:**

| | | | | | |
|---|---|---|---|---|---|
| 1 battery | | | | | 33A first accommodating cavity |
| | 11 explosion-proof valve | | | | 33B second accommodating cavity |
| | 12 top cover plate | | | 34 opening | |
| 2 upper cover | | | | 35 partition wall | |
| 3 pressing strip | | | 4 fire extinguishing agent | | |
| | 31 main body portion | | 5 sealing cover | | |
| | 32 bottom plate portion | | 6 end plate | | |
| | | 321 body | X transverse direction | | |
| | | 322 weakened area | Y longitudinal direction | | |
| | 33 accommodating cavity | | Z up and down direction | | |

### DESCRIPTION OF EMBODIMENTS

To make the objectives, technical solutions, and advantages of the present application clearer and more comprehensible, the present application can be further described below in detail with reference to the accompanying drawings and embodiments. It should be understood that the specific embodiments described herein are merely used to explain the present application, but are not intended to limit the present application.

In the description of the present application, unless otherwise specified and limited explicitly, the terms "first" and "second" are merely intended for a purpose of description, and shall not be understood as an indication or implication of relative importance. The term "a plurality of' refers to two or more than two. Unless otherwise specified or illustrated, the term "connection" should be understood broadly, for example, the "connection" can either be a fixed connection, or a detachable connection, or an integrated connection, or an electrical connection, or a signal connection; and the "connection" can either be a direct connection, or an indirect connection through an intermediary. Those of ordinary skill in the art can appreciate the specific meanings of the foregoing terms in the present application according to specific conditions.

In the description of the specification, it should be understood that the terms representing directions such as "up" and "down" described in the embodiments of the present application are described from the angles shown in the accompanying drawings, and should not be understood as limitation on the embodiments of the present application. In addition, in the context, it should also be understood that when it is mentioned that an element is connected "up" or "down" to the other element, it can not only be directly connected "up" or "down" to the other element, but also be indirectly connected "up" or "down" to the other element through an intermediate element. The present application can be further described below in detail through the specific embodiments with reference to the accompanying drawings.

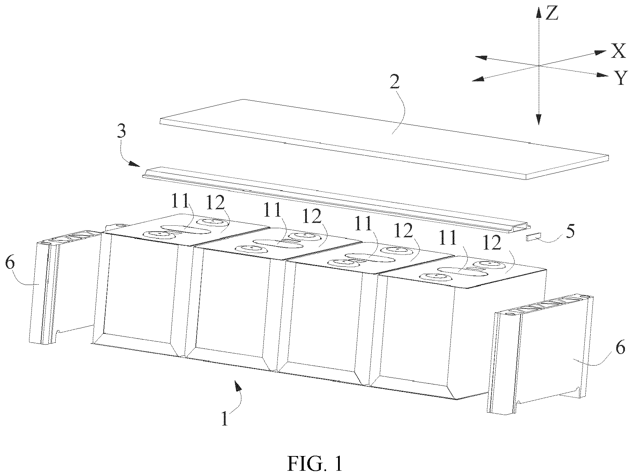

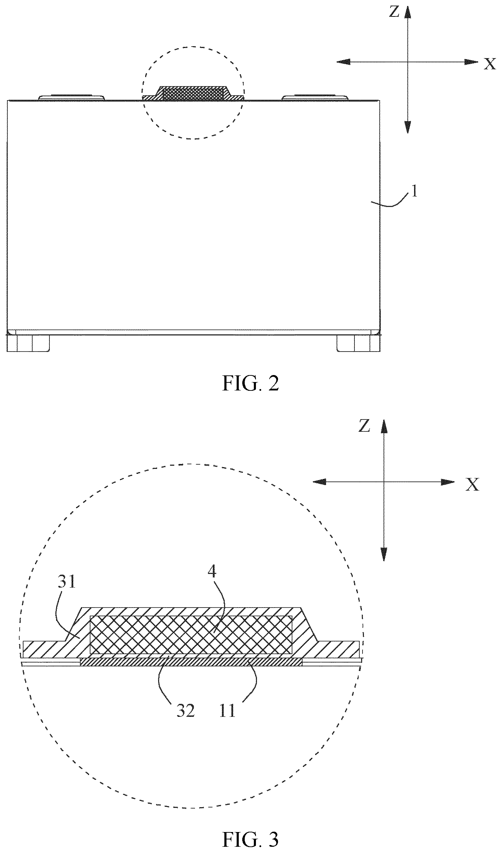

Referring to FIGS. 1 and 2, a battery module of the present application includes a plurality of batteries 1, an upper cover 2, a pressing strip 3, a fire extinguishing agent 4, a sealing cover 5, and two end plates 6.

The plurality of batteries 1 are arranged in a longitudinal direction Y, and each battery 1 includes a top cover plate 12, an electrode terminal 13 disposed on the top cover plate 12 and an explosion-proof valve 11.

An upper cover 2 is disposed above the plurality of batteries 1 in an up and down direction Z, which is used to protect the plurality of batteries 1, so as to avoid a problem of short circuit caused by external conductive materials contacting with the top cover plate 12 and/or the electrode terminal 13 of the battery 1.

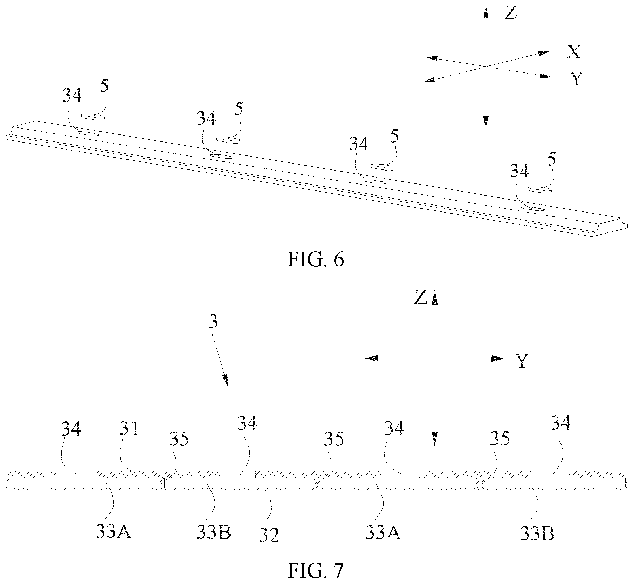

The pressing strip 3 is disposed between the plurality of batteries 1 and the upper cover 2, and covers the explosion-proof valves 11 of the batteries 1. Referring to FIGS. 3 and 7, the pressing strip 3 includes: a main body portion 31 and a bottom plate portion 32 which connected to the main body portion 31 and forms an accommodating cavity 33 together with the main body portion 31, and the fire extinguishing agent 4 is sealed in the accommodating cavity 33. Among them, the bottom plate portion 32 of the pressing strip 3 is configured to discharge the fire extinguishing agent 4 from the accommodating cavity 33 after being melted.

In the battery module of the present application, the fire extinguishing agent 4 is constantly stored in the accommodating cavity 33 of the pressing strip 3, so as to avoid wasteful use of the fire extinguishing agent 4 caused by the same flowing in all directions, so that the amount of the fire extinguishing agent 4 can be maintained at a constant level at all times. When the battery 1 occurs a thermal runaway, a high-temperature substance in the battery 1 (including a high-temperature and high-pressure gas, an electrolyte and other substances) can break through the explosion-proof valve 11. And at this time, the high-temperature substance can melt the bottom plate portion 32 of the pressing strip 3 and the fire extinguishing agent 4 can be timely discharged from the accommodating cavity 33, thereby enabling the fire extinguishing agent 4 to quickly flow into the interior of the battery 1 to reduce the temperature therefore, preventing the diffusion of the thermal runaway, and greatly reducing the degree of the thermal runaway, so as to fight for time for passengers to escape and/or manually extinguish the thermal runaway.

In order to ensure the bottom plate portion 32 of the pressing strip 3 can be smoothly melted by the high-temperature substance flushed out from the interior of the battery 1, a melting point of the pressing strip 3 is lower than the internal temperature of the battery 1 when the battery 1 occurs the thermal runaway, preferably, the melting point of the pressing strip 3 is 200°C to 500°C.

A material of the pressing strip can be metal. Preferably, the material of the pressing strip 3 is aluminum. The fire extinguishing agent 4 can be water, dry powder, carbon dioxide and other common fire extinguishing materials.

When the battery 1 occurs the thermal runaway, in order to prevent the high-temperature substance flushed out from the battery 1 from continuing to melt the main body portion 31 after melting the bottom plate portion 32 of the pressing strip 3, thus resulting in the waste of the fire extinguishing agent 4, thicknesses of the main body portion 31 is greater than thicknesses of the bottom plate portion 32.

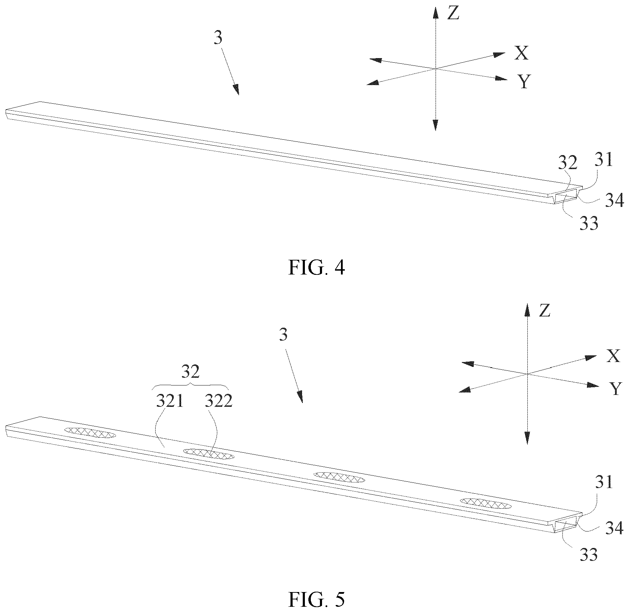

In one embodiment, referring to FIGS. 3 and 4, the bottom plate portion 32 of the pressing strip 3 can be a thin wall structure with uniform thicknesses.

In the other embodiment, referring to FIGS. 1 and 2, the bottom plate portion 32 of the pressing strip 3 can include: a body 321 and a plurality of weakened areas 322 which disposed on the body 321 at intervals in the longitudinal direction Y. Each weakened area 322 corresponds to an explosion-proof valve 11 of a battery 1 and is configured to discharge the fire extinguishing agent 4 from the accommodating cavity 33 after being melted. When one or several batteries 1 occur the thermal runaway, only the weakened area 322 corresponding to each battery 1 is melted by the high-temperature substance flushed out from the interior of the corresponding battery 1. At this time, the fire extinguishing agent 4 in the accommodating cavity 33 is prevented from flowing to other places except the interior of each battery 1 (such as above the top cover plate 12 of the battery 1), so that the fire extinguishing agent 4 can be fully utilized, thus quickly reducing the temperature of the corresponding battery 1.

Referring to FIGS. 1 and 6, the pressing strip 3 further includes: an opening 34 for injecting the fire extinguishing agent 4 into the accommodating cavity 33. The sealing cover 5 seals the opening 34 of the pressing strip 3 after injecting the fire extinguishing agent 4 into the accommodating cavity 33. Among them, the opening 34 of the pressing strip 3 is the same in quantity as the accommodating cavity 33.

In one embodiment, referring to FIGS.4 and 5, the accommodating cavity 33 is one in quantity, and the accommodating cavity 33 extends in the longitudinal direction Y and covers the explosion-proof valves 11 of all the batteries 1.

In the other embodiment, referring to FIGS. 6 and 7, the accommodating cavities 33 are multiple in quantity, and each opening 34 of the pressing strip 3 passes through an upper wall of the main body portion 31 in the up and down direction Z and is connected to the corresponding accommodating cavity 33.

The multiple accommodating cavities 33 include a first accommodating cavity 33A and a second accommodating cavity 33B. The pressing strip 3 further includes: a partition wall 35, extending in the up and down direction Z and connected to the bottom plate portion 32 and the main body portion 31. The partition wall 35, together with the main body portion 31 and bottom plate portion 32, enclose the first accommodating cavity 33A and the second accommodating cavity 33B. Among them, the partition wall 35 can be one or multiple in quantity.

The first accommodating cavity 33A and the second accommodating cavity 33B are located on both sides of the partition wall 35 in the longitudinal direction Y respectively, and the first accommodating cavity 33A and the second accommodating cavity 33B cover the explosion-proof valves 11 of the corresponding batteries 1 respectively.

The two end plates 6 are disposed at both ends of the plurality of batteries 1 in the longitudinal direction Y respectively to clamp and fix the plurality of batteries 1. Among them, the pressing strip 3 can be fixed (for example, glued) on the top cover plate 12 of the plurality of batteries 1, and can also be fixed on the two end plates 6.

## Claims

1. A battery module, comprising:
a plurality of batteries (1), arranged in a longitudinal direction (Y), each battery (1) is provided with an explosion-proof valve (11);
an upper cover (2), disposed above the plurality of batteries (1) in an up and down direction (Z); and
a pressing strip (3), disposed between the plurality of batteries (1) and the upper cover (2) and covers the explosion-proof valves (11) of the batteries (1), and the pressing strip (3) comprises: a main body portion (31) and a bottom plate portion (32) which connected to the main body portion (31) and forms an accommodating cavity (33) together with the main body portion (31), and a fire extinguishing agent (4) is sealed in the accommodating cavity (33);
wherein the bottom plate portion (32) of the pressing strip (3) is configured to discharge the fire extinguishing agent (4) from the accommodating cavity (33) after being melted;
thicknesses of the bottom plate portion (32) is smaller than thicknesses of the main body portion (31); and
the bottom plate portion (32) comprises: a body (321) and a plurality of weakened areas (322) which disposed on the body (321) at intervals in the longitudinal direction (Y);
each weakened area (322) corresponds to an explosion-proof valve (11) of a battery (1) and is configured to discharge the fire extinguishing agent (4) from the accommodating cavity (33) after being melted.

2. The battery module according to claim 1, wherein the pressing strip (3) further comprises: an opening (34) for injecting the fire extinguishing agent (4) into the accommodating cavity (33);
the battery module further comprises: a sealing cover (5) for sealing the opening (34) of the pressing strip (3) after injecting the fire extinguishing agent (4) into the accommodating cavity (33);
the opening (34) of the pressing strip (3) is the same in quantity as the accommodating cavity (33).

3. The battery module according to claim 2, wherein the accommodating cavity (33) is one in quantity, and the accommodating cavity (33) extends in the longitudinal direction (Y) and covers the explosion-proof valves (11) of all the batteries (1).

4. The battery module according to claim 2, wherein the accommodating cavities (33) are multiple in quantity, and each opening (34) of the pressing strip (3) passes through an upper wall of the main body portion (31) in the up and down direction (Z) and is connected to the corresponding accommodating cavity (33).

5. The battery module according to claim 2, wherein the accommodating cavities (33) are multiple in quantity, and the multiple accommodating cavities (33) comprise a first accommodating cavity (33A) and a second accommodating cavity (33B);
the pressing strip (3) further comprises: a partition wall (35), extending in the up and down direction (Z) and connected to the bottom plate portion (32) and the main body portion (31);
the first accommodating cavity (33A) and the second accommodating cavity (33B) are located on both sides of the partition wall (35) in the longitudinal direction (Y) respectively, and the first accommodating cavity (33A) and the second accommodating cavity (33B) cover the explosion-proof valves (11) of the corresponding batteries (1) respectively.

6. The battery module according to claim 5, wherein the partition wall (35) is one or multiple in quantity.

7. The battery module according to any one of claims 1 to 6, wherein the pressing strip (3) is fixed on a top cover plate (12) of the plurality of batteries (1).

8. The battery module according to claim 7, wherein the pressing strip (3) is glued on the top cover plate (12) of the plurality of batteries (1).

9. The battery module according to any one of claims 1 to 8, wherein the battery module further comprises: two end plates (6), disposed at both ends of the plurality of batteries (1) in the longitudinal direction (Y) respectively, and the pressing strip (3) is fixed on the two end plates (6).

10. The battery module according to any one of claims 1 to 9, wherein a melting point of the pressing strip (3) is 200°C to 500°C.

11. The battery module according to claim 10, wherein the pressing strip (3) is a metal pressing strip.

12. The battery module according to claim 11, wherein the material of the pressing strip (3) is aluminum.

## Patentansprüche

1. Batteriemodul, umfassend:
mehrere Batterien (1), die in einer Längsrichtung (Y) angelegt sind, wo-bei jede Batterie (1) mit einem explosionssicheren Ventil (11) versehen ist;
eine obere Abdeckung (2), die oberhalb der mehreren Batterien (1) ineiner Richtung (Z) nach oben und nach unten angeordnet ist; und
ein Druckstreifen (3), der zwischen den mehreren Batterien (1) und der oberen Abdeckung (2) angeordnet ist und die explosionssicheren Ventile (11) der Batterien (1) abdeckt, wobei der Druckstreifen (3) umfasst: einen Hauptkör-perabschnitt (31) und einen Bodenplattenabschnitt (32), der mit dem Hauptkör-perabschnitt (31) verbunden ist und zusammen mit dem Hauptkörperabschnitt
(31) eine Aufnahmeaussparung (33) bildet, und wobei ein Feuerlöschmittel (4)in der Aufnahmeaussparung (33) versiegelt ist;
wobei der Bodenplattenabschnitt (32) des Druckstreifens (3) dazu einge-richtet ist, das Feuerlöschmittel (4) aus der Aufnahmeaussparung (33), nach- dem es geschmolzen ist, auszulassen;
Dicken des Bodenplattenabschnitts (32) kleiner als Dicken des Hauptkörperabschnitts (31) sind; und
der Bodenplattenabschnitt (32) umfasst: einen Körper (321) und mehrere geschwächte Bereiche (322), die auf dem Körper (321) in Intervallen in der Längsrichtung (Y) angeordnet sind;
wobei jeder geschwächte Bereich (322) einem explosionssicheren Ventil (11) einer Batterie (1) entspricht und dazu eingerichtet ist, das Feuerlöschmittel (4) aus der Aufnahmeaussparung (33), nachdem es geschmolzen ist, auszulas-sen.

2. Batteriemodul nach Anspruch 1, wobei der Druckstreifen (3) ferner um- fasst: eine Öffnung (34) zum Injizieren des Feuerlöschmittels (4) in die Aufnahmeaussparung (33);
wobei das Batteriemodul ferner umfasst: eine Abdichtungsabdeckung (5)zum Abdichten der Öffnung (34) des Druckstreifen (3), nach dem Injizieren des Feuerlöschmittels (4) in die Aufnahmeaussparung (33);
wobei die Öffnung (34) des Druckstreifens (3) in der Anzahl gleich der Aufnahmeaussparung (33) ist.

3. Batteriemodul nach Anspruch 2, wobei die Aufnahmeaussparung (33) eine in der Anzahl ist und die Aufnahmeaussparung (33) in der Längsrichtung (Y) verläuft und die explosionssicheren Ventile (11) aller Batterien (1) abdeckt.

4. Batteriemodul nach Anspruch 2, wobei die Aufnahmeaussparungen (33) mehrere in der Anzahl sind und jede Öffnung (34) des Druckstreifens (3) durch eine obere Wand des Hauptkörperabschnitts (31) in der Richtung (Z) nach obenund nach unten hindurch verläuft und mit der entsprechenden Aufnahme- aussparung (33) verbunden ist.

5. Batteriemodul nach Anspruch 2, wobei die Aufnahmeaussparungen (33) mehrere in der Anzahl sind und die mehreren Aufnahmeaussparungen (33) ei-ne erste Aufnahmeaussparung (33A) und eine zweite Aufnahmeaussparung (33B) umfassen;
wobei der Druckstreifen (3) ferner umfasst: eine Partitionswand (35), diein der Richtung (Z) nach oben und nach unten verläuft und mit dem Bodenplat-tenabschnitt (32) und dem Hauptkörperabschnitt (31) verbunden ist;
wobei sich die erste Aufnahmeaussparung (33A) und die zweite Aufnahmeaussparung (33B) jeweils auf beiden Seiten der Partitionswand (35) in der Längsrichtung (Y) befinden und die erste Aufnahmeaussparung (33A) unddie zweite Aufnahmeaussparung (33B) jeweils die explosionssicheren Ventile (11) der entsprechenden Batterien (1) abdecken.

6. Batteriemodul nach Anspruch 5, wobei die Partitionswand (35) eine inder Anzahl ist oder mehrfach vorgesehen ist.

7. Batteriemodul nach einem der Ansprüche 1 bis 6, wobei der Druckstrei-fen (33) auf einer oberen Abdeckungsplatte (12) der mehreren Batterien (1) fi-xiert ist.

8. Batteriemodul nach Anspruch 7, wobei der Druckstreifen (33) auf der oberen Abdeckungsplatte (12) der mehreren Batterien (1) angeklebt ist.

9. Batteriemodul nach einem der Ansprüche 1 bis 8, wobei das Batteriemo-dul ferner umfasst: zwei Endplatten (6), die jeweils an beiden Enden der mehre-ren Batterien (1) in der Längsrichtung (Y) angeordnet sind, und wobei der Druckstreifen (3) auf den beiden Endplatten (6) fixiert ist.

10. Batteriemodul nach einem der Ansprüche 1 bis 9, wobei ein Schmelz-punkt des Druckstreifens (3) zwischen 200°C und 500°C liegt.

11. Batteriemodul nach Anspruch 10, wobei der Druckstreifen (3) ein Metalldruckstreifen ist.

12. Batteriemodul nach Anspruch 11, wobei das Material des Druckstreifens (3) Aluminium ist.

## Revendications

1. Module de batterie comprenant :
une pluralité de batteries (1) agencées dans une direction longitudinale (Y), chaque batterie (1) étant pourvue d'une valve antidéflagrante (11),
un cache supérieur (2) disposé au-dessus de la pluralité de batteries (1) dans une direction verticale (Z) et
une bande de pression (3) disposée entre la pluralité de batteries (1) et le cache supérieur (2) et couvrant les valves antidéflagrantes (11) des batteries (1), la bande de pression (3) comprenant une partie de corps principale (31) et une partie de plaque de fond (32) reliée à la partie de corps principale (31) et formant, ensemble avec la partie de corps principale (31), une cavité de logement (33) et un agent extincteur de feu (4) étant scellé dans la cavité de logement (33),
**caractérisé en ce que** la partie de plaque de fond (32) de la bande de pression (3) est configurée pour décharger l'agent extincteur de feu (4) de la cavité de logement (33) après avoir été fondue,
**en ce que** l'épaisseur de la partie de plaque de fond (32) est inférieure à l'épaisseur de la partie de corps principale (31) et
**en ce que** la partie de plaque de fond (32) comprend un corps (321) et une pluralité de zones affaiblies (322) qui sont disposées sur le corps (321) à des intervalles dans la direction longitudinale (Y),
chaque zone affaiblie (322) correspondant à une valve antidéflagrante (11) d'une batterie (1) et étant configurée pour décharger l'agent extincteur de feu (4) de la cavité de logement (33) après avoir été fondue.

2. Module de batterie selon la revendication 1, **caractérisé en ce que** la bande de pression (3) comprend en outre une ouverture (34) pour l'injection de l'agent extincteur de feu (4) dans la cavité de logement (33),
le module de batterie comprenant en outre un cache de scellement (5) pour sceller l'ouverture (34) de la bande de pression (3) après l'injection de l'agent extincteur de feu (4) dans la cavité de logement (33),
l'ouverture (34) de la bande de pression (3) étant en nombre égal à celui des cavités de logement (33).

3. Module de batterie selon la revendication 2, **caractérisé en ce qu'**il y a une seule cavité de logement (33) et la cavité de logement (33) s'étend dans la direction longitudinale (Y) et recouvre les valves antidéflagrantes (11) de toutes les batteries (1).

4. Module de batterie selon la revendication 2, **caractérisé en ce que** les cavités de logement (33) sont plusieurs et chaque ouverture (34) de la bande de pression (3) passe par une paroi supérieure de la partie de corps principale (31) dans la direction verticale (Z) et est reliée à la cavité de logement (33) correspondante.

5. Module de batterie selon la revendication 2, **caractérisé en ce que** les cavités de logement (33) sont plusieurs et la pluralité de cavités de logement (33) comprend une première cavité de logement (33A) et une deuxième cavité de logement (33B),
la bande de pression (3) comprenant en outre une paroi de séparation (35) s'étendant verticalement et étant reliée à la partie de plaque de fond (32) et la partie de corps principale (31),
la première cavité de logement (33A) et la deuxième cavité de logement (33B) étant disposées des deux côtés de la paroi de séparation (35) dans la direction longitudinale (Y) et la première cavité de logement (33A) et la deuxième cavité de logement (33B) recouvrant respectivement les valves antidéflagrantes (11) des batteries correspondantes (1).

6. Module de batterie selon la revendication 5, **caractérisé en ce que** la paroi de séparation (35) est seule ou est multiple en quantité.

7. Module de batterie selon l'une des revendications 1 à 6, **caractérisé en ce que** la bande de pression (3) est fixée sur une plaque de couverture supérieure (12) de la pluralité de batteries (1).

8. Module de batterie selon la revendication 7, **caractérisé en ce que** la bande de pression (3) est collée sur la plaque de couverture supérieure (12) de la pluralité de batteries (1).

9. Module de batterie selon l'une des revendications 1 à 8, **caractérisé en ce que** le module de batterie comprend en outre deux plaques d'extrémité (6) disposées aux deux extrémités respectives de la pluralité de batteries (1) dans la direction longitudinale (Y) et la bande de pression (3) est fixée aux deux plaques d'extrémité (6).

10. Module de batterie selon l'une des revendications 1 à 9, **caractérisé en ce qu'**une température de fusion de la bande de pression (3) est de 200 °C à 500 °C.

11. Module de batterie selon la revendication 10, **caractérisé en ce que** la bande de pression (3) est une bande de pression métallique.

12. Module de batterie selon la revendication 11, **caractérisé en ce que** le matériau de la bande de pression (3) est de l'aluminium.
